# EUROPEAN PATENT SPECIFICATION

(11) **EP 4 520 059 B1**
(45) Date of publication and mention of the grant of the patent: **30.09.2026**
(21) Application number: 23852994.5
(22) Date of filing: 09.08.2023
(51) Int. Cl.: H04W 4/40, H04W 24/04, H04W 4/02

(54) **METHOD AND APPARATUS FOR MANAGING PROXIMITY INFORMATION BETWEEN UES**
VERFAHREN UND VORRICHTUNG ZUR VERWALTUNG VON PROXIMITÄTSINFORMATIONEN ZWISCHEN BENUTZERGERÄTEN
PROCÉDÉ ET APPAREIL PERMETTANT DE GÉRER DES INFORMATIONS DE PROXIMITÉ ENTRE DES ÉQUIPEMENTS UE

(30) Priority: 09.08.2022 GB 202211574
(43) Date of publication of application: 12.03.2025
(73) Proprietor: Samsung Electronics Co., Ltd., Suwon-si, Gyeonggi-do 16677 (KR)
(72) Inventor: ESTEVEZ, David Gutierrez, Suwon-si, Gyeonggi-do 16677 (KR); MACH, Tomasz, Suwon-si, Gyeonggi-do 16677 (KR)
(74) Representative: Gulde & Partner
(86) International application number: PCT/KR2023/011778
(87) International publication number: WO 2024/035125

(56) References cited:
- WO-A1-2022/069047
- US-A1- 2014 176 714
- US-A1- 2016 125 739
- US-A1- 2018 261 094
- US-A1- 2018 261 094
- US-A1- 2019 180 623
- US-A1- 2019 180 623
- US-B2- 11 218 850
- ANONYMOUS: "3rd Generation Partnership Project; Technical Specification Group Services and System Aspects; Architecture enhancements for 5G System (5GS) to support network data analytics services (Release 17)", no. V17.5.0, 15 June 2022 (2022-06-15), pages 1 - 207, XP052182874, Retrieved from the Internet <URL:https://ftp.3gpp.org/Specs/archive/23_series/23.288/23288-h50.zip 23288-h50.docx> [retrieved on 20220615]

## Description

### [Technical Field]

The present invention relates to a network, for example a 5G network.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources. There is a need to improve safety, for example by minimising or eliminating physical collision risk to human users, non-human users and/or user equipment, UEs.
Document WO 2022/069047 A1 relates to UE trajectory monitoring and analysis, including receiving or collecting trajectory information for at least one user equipment, UE, coupled with state information associated with the at least one user equipment, UE, receiving or collecting, from a network node, location information for the at least one user equipment, UE, and location information for one or more other user equipment, UEs, obtaining a correlation of the trajectory information that is coupled with the state information of the at least one user equipment with the location information for the other user equipment, UEs, and providing a status indication associated to at least one location, where the at least one location is determined to have a predefined attribute based on the correlation. Document US 2018/0261094 A1 relates to a collision preventing ECU that selects an obstacle point which has probability of colliding with an own vehicle, and calculates a collision time periods (TTC) of the obstacle point.

### [Disclosure of Invention]

### [Solution to Problem]

It is one aim of the present invention, amongst others, to provide a method and a network which at least partially obviates or mitigates at least some of the disadvantages of the prior art, whether identified herein or elsewhere. For instance, it is an aim of embodiments of the invention to provide a method and a network that improves human user, non-human user and/or user equipment, UE, safety. The invention relates to a method according to claim 1, an apparatus according to claim 5 and a computer-readable storage medium according to claim 9.

According to an aspect of the present disclosure, a method for managing proximity information between user equipments (UEs) by a network entity is provided. The method may comprise obtaining information related to each of the UEs, wherein the information related to each of the UEs includes at least one of a location, a speed and a heading of each of the UEs; obtaining time to collision (TTC) information related to the UEs based on the obtained information related to each of the UEs; and providing the obtained TTC information related to the UEs to another network entity.

The TTC information related to the UEs may include information indicating a TTC of the UEs.

The TTC information related to the UEs may further include information indicating a confidence level of prediction of the TTC of the UEs and information indicating accuracy of the TTC.

The information related to each of the UEs may further include information indicating a trajectory of each of the UEs.

The network entity may be a network data analytics function (NWDAF).

The information related to each of the UEs may be obtained from an operation, administration and maintenance (OAM).

According to an aspect of the present disclosure, an apparatus for a network entity for managing proximity information between user equipments (UEs) is provided. The apparatus may comprise a transceiver and a controller coupled to the transceiver. The controller may be configured to obtain information related to each of the UEs, wherein the information related to each of the UEs includes at least one of a location, a speed and a heading of each of the UEs; obtain time to collision (TTC) information related to the UEs based on the obtained information related to each of the UEs; and provide the obtained TTC information related to the UEs to another network entity.

According to an aspect of the present disclosure, a non-transitory computer-readable storage medium storing instructions is provided. The instructions which, when executed by a controller of an apparatus for a network entity for managing proximity information between user equipments (UEs), causes the apparatus to perform operations. The operations may comprise obtaining information related to each of the UEs, wherein the information related to each of the UEs includes at least one of a location, a speed and a heading of each of the UEs; obtaining time to collision (TTC) information related to the UEs based on the obtained information related to each of the UEs; and providing the obtained TTC information related to the UEs to another network entity.

### [Brief Description of Drawings]

For a better understanding of the invention, and to show how exemplary embodiments of the same may be brought into effect, reference will be made, by way of example only, to the accompanying diagrammatic Figures, in which:
Figure 1 schematically depicts Time to Collision usage examples in C-ITS road safety application - TTC controls the required collision avoidance action;
Figure 2 schematically depicts an example of a Time to Collision calculation between a vehicle and VRU;
Figure 3 schematically depicts Time to Collision service exposure overview;
Figure 4 schematically depicts an exemplary flow chart related to a method for managing proximity information between UEs; and
Figure 5 schematically depicts an exemplary block diagram of an apparatus for a network entity.

### [Mode for the Invention]

According to the present invention there is provided a method, as set forth in the appended claims. Also provided is network. Other features of the invention will be apparent from the dependent claims, and the description that follows.

The first aspect provides a method of controlling a network, for example a 5G network, including a subject user equipment, UE, and a target UE, the method comprising:
obtaining respective operational information, for example a location, a speed, an acceleration and/or a heading and optionally, a size class, of the subject UE and of the target UE;
calculating a time to collision, TTC, between the subject UE and the target UE;
controlling the network, based on the calculated TTC.

The invention defines new analytics use case(s) and related solution(s), particularly for and/or in 5G network, to better support future requirements of new verticals and their applications.

The invention enables Time to Collision (TTC) service exposure for Vehicle-to-Everything (V2X) use cases and Cooperative Intelligent Transport Systems (C-ITS) applications, for example with reference to 5G System (5GS), via architecture and/or analytics enhancements.

For example, the enhancements may be based on existing 5G Network Data Analytics Function (NWDAF) defined in 5G Core Network (5GC) leveraging UEs position, movement trajectory and proximity information.

Generally, TTC is the most well-known time-based safety indicator. TTC means the value of time obtained by dividing the longitudinal distance (in the direction of travel of the subject vehicle) between the subject vehicle and the target by thelongitudinal relative speed of the subject vehicle and the target, at any instant in time [7].

TTC is a parameter used in C-ITS to estimate the likelihood of a collision (collision risk analysis) and is defined as a time period before the physical collision of one moving object with another one (both with known location) with a conflicting trajectory.

For V2X Longitudinal Collision Risk Warning (LCRW) application(s), predicted TTC may be calculated based on processing V2X messages such as Cooperated Awareness Messages (CAM) [8] or Decentralized Environmental Notification Messages (DENM) [9] based on parameters highlighted in section 5.3.2 of [5] such as:
- Distance separating Subject Vehicle (SV) and Target Vehicle (TV);
- Longitudinal alignment of the SV and TV;
- The speed of SV and TV;
- The vehicle type, mass of SV and TV;
- Estimated driver reaction time;
- Known driver's manoeuvring intentions; and/or
- Known weather conditions or road hazard (reducing visibility or stability).

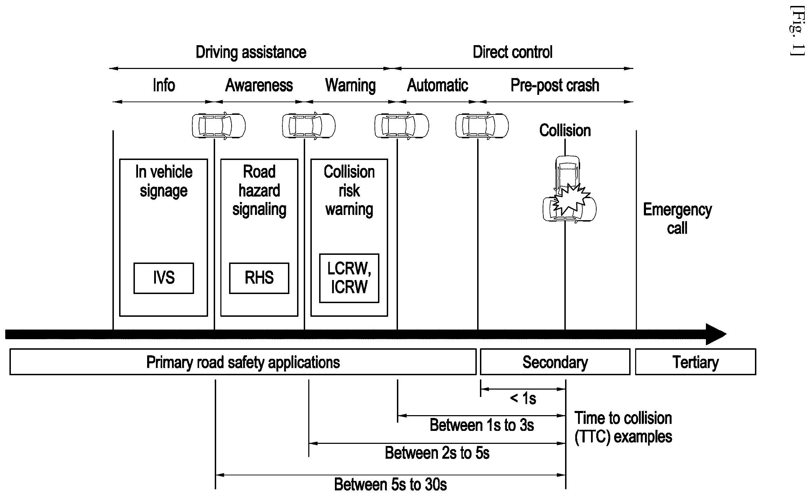

TTC based applications and services can be used in a variety of 5G verticals including smart transportation, smart city and industry 4.0 (e.g. moving connected factory robots). For example, in C-ITS application(s), TTC is typically used to decide the nature and urgency of the required road collision avoidance action [5], [6] (see Figure 1). For example, TTC may also be used to trigger other activities e.g. starting a transmission of Vulnerable Road User Awareness Messages in a VRU device [6]

Advantageously, the invention extends analytics and exposure support, for example 5GC analytics and exposure support, to TTC parameter calculation based on precise UE localization information and its mobility characteristics. Furthermore, the invention defines new signaling procedures between different elements of the network, for example of the 5GC, to support defined analytics. As a result, the invention is an enabler, for example a 5G analytics-based enabler, for new verticals and their services such as C-ITS, Industry 4.0, Smart Factory.

In more detail, the invention introduces new safety focused UE mobility related KPI relative to other UE(s) based on 5GC capabilities such as increased accuracy of UE location information (down to centimetre level), information exposure and network data analytics.

Additionally and/or alternatively, the invention addresses a lack of NWDAF analytics support (statistics, prediction) for a physical UE connected object and its mobility safety such as collision risk with other physical UE connected objects (e.g. vehicle or robot type UE).

The invention could be used as a location-based enabler for defining new business applications in new 5G verticals such as:
- Connected and automated mobility e.g.
- Driving risk evaluation for individual vehicle or Vulnerable Road User (VRU);
- Traffic management for vehicles in a specific region;
- Transport network planning for a specific road network section.
- Industry 4.0 e.g.
- Factory automation - collision risk evaluation for factory robots.

3GPP SA recently (R18) approved 'Study on Enablers for Network Automation for 5G - phase 3' [1] (SP-220678) with the following Key Issue#9 defined in [2]:

### 5.9 Key Issue #9: Enhancement of NWDAF with finer granularity of location information

### 5.9.1 Description

The NWDAF can retrieve and collect UE location information and then provide some analytic(s) to NWDAF consumer(s), e.g. UE mobility analytics, QoS Sustainability Analytics as defined in TS 23.288 [5]. However, the UE location information that NWDAF can obtain is only TA/*cell granularity in Rel-17.*

*The horizontal accuracy and the vertical accuracy of the existing location service can reach a granularity level finer than TA and cell level. Meanwhile, some extra information (e.g. speed, heading) could possibly also be provided by the location service. But whether such LCS related information is beneficial for the NWDAF is not clear, and it also needs to be studied how the NWDAF can obtain such LCS related information. Therefore, a KI to study whether and how the NWDAF can provide additional benefits from location service is required.*

*In this key issue, the following aspects will be studied:*
- *Identify use case(s) and corresponding existing or new Analytics ID(s) where the analytics require location information with finer granularity than TA*/*cell level, and how to enhance related existing Analytics ID(s).*
- *Identify how an NWDAF determines that location information with finer granularity than cell*/*TA level is required in output analytics.*
- *Identify what input data needs to be collected to deliver analytics with fine granularity location information.*
- *Identify how NWDAF acquires the input data to deliver finer granularity location information. Whether and how the functionality and services of NWDAF or other NF(s) need to be enhanced.*

*NOTE 1: Coordinated activities with the eLCS_ph3 study are needed.*

*NOTE 2: Some examples of UE location different than cell*/*TA level are described in clause 4.2 and 4.3, TS 22.071 [6].*

In addition, 3GPP in [3] defined requirements for 'UE mobility analytics' ([3] Section 6.7.2) and also in [2] defined 'Solution#27: Relative Proximity Analytics' ([2] Section 6.27) and this invention builds on and expands both of them.

Standards bodies are key entities in charge of enabling cellular communications. Hence, this invention impacts on standards as a new method to define UE TTC service exposure in 5G network. The relevant 3GPP standards documents for this technology are captured in references [1] to [3] shown below.

In one example, the method comprises determining a safety focused UE mobility related key performance indicator, KPI, for example for the subject UE relative to the target UE, optionally using the calculated TTC.

In more detail, the invention introduces new safety focused UE mobility related KPI relative to other UE(s) based on 5GC capabilities such as increased accuracy of UE location information (down to centimetre level), information exposure and network data analytics.

In one example, obtaining the respective operational information of the subject UE and of the target UE comprises sharing the respective operational information of the subject UE and of the target UE via one or more V2X messages.

The invention leverages the availability of dynamic operational information related to a physical object linked to the UE (vehicle or robot UE) e.g. location, speed and heading (such operational information will be shared by V2X messages in future Cooperative-ITS systems - see next section for details).

In one example, the method comprises calculating respective trajectories of the subject UE and the target UE using the respective operational information of the subject UE and the target UE.

Such operational information can be collected from neighbouring UEs in the same geographical area to calculate objects trajectory and potential TTC.

In one example, calculating the TTC between the subject UE and the target UE comprises calculating, by the network such as the 5GC, by the subject UE and/or by the target UE, the TTC between the subject UE and the target UE and optionally, transmitting, by the subject UE and/or by the target UE to the network such as to the 5GC, the calculated TTC.

Such operational information can be collected from neighbouring UEs in the same geographical area to calculate objects trajectory and potential TTC, which depending on the UE processing capabilities could be either calculated in the UE (UE could also leverage sensor fusion technologies from other available sensors such as camera, radar, lidar etc. to calculate TTC) and transmitted to the 5GS or it could be calculated in 5GC itself (5GC could leverage information from Access and Mobility Management Function (AMF), Operation, Administration and Maintenance (OAM), Proximity-based Services (ProSe) sub-system, Location Service (LCS) subsystem and Network Exposure Function (Nef) for it).

In one example, calculating the TTC between the subject UE and the target UE comprises calculating the TTC between the subject UE and the target UE using respective dimensions thereof, for example wherein the respective dimensions thereof are included in the obtained respective operational information.

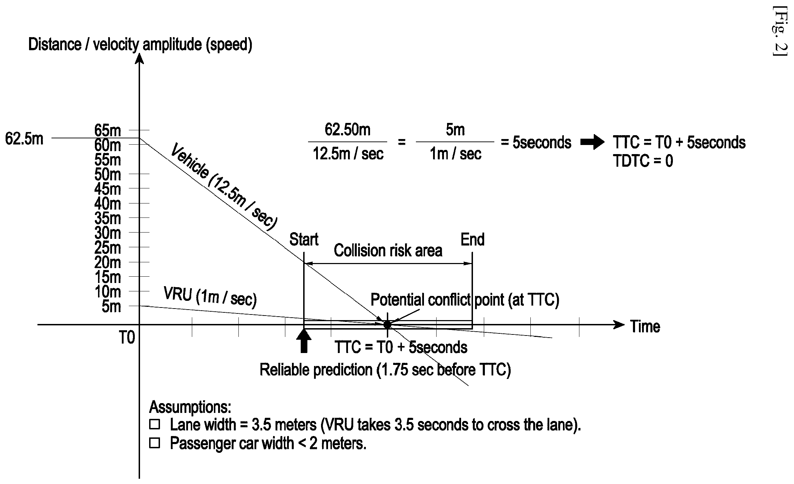

In C-ITS V2X messages (e.g. CAM), physical vehicle size is transmitted (length, width) which may be useful for a precise calculation of the distance between objects with conflicting trajectories (Figure 2).

In one example, calculating the TTC between the subject UE and the target UE comprises deriving a collision risk distance and calculating the TTC between the subject UE and the target UE using the derived collision risk distance.

However, to make the TTC analytics generic for different verticals with different physical object sizes (e.g. vehicle vs robot) and for the implementation simplicity in 5GS, we propose to use a new generic parameter called 'Collision risk distance' which may be derived from the typical object size and could be provided by the Application Function.

In one example, the method comprises estimating a TTC accuracy and/or a TTC confidence.

In one example, obtaining the respective operational information of the subject UE and of the target UE comprises filtering by predefined geographical area, time slot start and/or time slot duration.

In one example, obtaining the respective operational information of the subject UE and of the target UE comprises obtaining the respective operational information of the subject UE and of the target UE via one or more VRU Awareness Messages.

In one example, the method comprises identifying and/or prioritising a collision avoidance action, optionally using the calculated TTC.

For example, in C-ITS application, TTC is typically used to decide the nature and urgency of the required road collision avoidance action [5], [6] (see Figure 1).

In one example, the method comprises triggering an activity, for example starting a transmission of Vulnerable Road User Awareness Message in a VRU device, based on the TTC.

For example, TTC may be used to trigger other activities e.g. starting a transmission of Vulnerable Road User Awareness Messages in a VRU device [6].

The second aspect provides a method of collision risk profile analysis, for example of a specific road / V2X user (e.g. vehicle, VRU) such as the subject UE and/or the target UE, optionally during a predefined time period comprising the method according to any previous claim; a method of collision risk profile analysis, for example of a specific road network section / location, optionally during a predefined time period comprising the method according to any previous claim; and/or a method of collision risk profile analysis, for example of a specific smart factory user such as a robot, optionally during a predefined time period comprising the method according to the first aspect.

The third aspect method of connected and automated mobility and/or V2X (for example: driving risk evaluation for an individual vehicle and/or a Vulnerable Road User, VRU; traffic management, such as for vehicles in a specific region; and/or transport network planning, such as for a specific road network section) and/or a method of Industry 4.0 (for example: factory automation) comprising the method according to the first aspect and/or the second aspect.

The fourth aspect provides a network, for example a 5G network, configured to implement the method according to the first aspect, the second aspect and/or the third aspect.

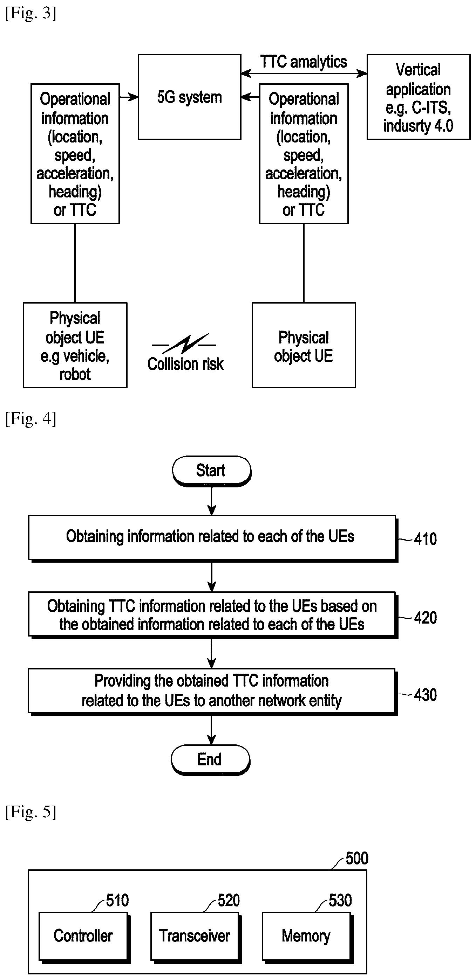

This invention introduces a TTC service exposure framework in the 5G system which could be used in different vertical use cases (e.g. V2X and Smart Factory) which use 5G UE connectivity. In particular, use cases related to the user mobility describing scenarios with moving physical objects such as cars, VRUs or factory robots creating potential collision and safety risk with similar object in their operational environment (e.g. road, factory floor). The invention leverages the availability of dynamic operational information related to a physical object linked to the UE (vehicle or robot UE) e.g. location, speed and heading (such operational information will be shared by V2X messages in future Cooperative-ITS systems - see next section for details). Such information can be collected from neighbouring UEs in the same geographical area to calculate objects trajectory and potential TTC, which depending on the UE processing capabilities could be either calculated in the UE (UE could also leverage sensor fusion technologies from other available sensors such as camera, radar, lidar etc. to calculate TTC) and transmitted to the 5GS or it could be calculated in 5GC itself (5GC could leverage information from Access and Mobility Management Function (AMF), Operation, Administration and Maintenance (OAM), Proximity-based Services (ProSe) sub-system, Location Service (LCS) subsystem and Network Exposure Function (Nef) for it). An example of TTC calculation between for vehicle and VRU object (C-ITS vertical) is presented in Figure 2. 5GS (e.g. NWDAF or similar analytics network function in 5GC) could calculate and/or store TTC information for a specific UE for exposing it later to external entities such as 5G verticals application server(s) for use (see examples below). An overview of the TTC service exposure framework is presented in Figure 3.

### 1. Time To Collision analytics specification

TTC analytics service could support transport vertical related businesses such as a driver / car insurance, traffic management, transport network or Industry 4.0 companies to improve their decision making process. In particular, it could be achieved by providing a comprehensive Time to Collision parameter data analysis tool for the relevant stakeholders to support their analytics requirements. To this end, the following representative scenarios were identified with detailed description of the parameters required to calculate TTC provided in Table 1 (TTC calculation example based on C-ITS is presented in Figure 2):
a)C-ITS: Analysis of a collision risk profile of a specific road / V2X user (e.g. vehicle, VRU) during a predefined time period - for a driver / car insurance business needs;
b)C-ITS: Analysis of a collision risk profile of a specific road network section / location during a predefined time period - for traffic management or a transport network planning business needs; and
c)Industry 4.0: Analysis of a collision risk profile of a specific smart factory user (e.g. robot).

Parameters to calculate TTC are described in Table 1. Specific format of the parameters could be defined in vertical application standards e.g. for C-ITS In Europe (there is a similar standard in US) there is currently ETSI Intelligent Transport Systems standard [8] which defines periodically sent (typically between 0.1-1 second) V2X Cooperative Awareness Messages (CAM) - in US V2X standard they are called Basic Safety Messages) which include vehicle operational info such as vehicle location, size, heading, speed and acceleration (see Table 2). There is a similar ETSI ITS standard (TS 103 300-2) defined for Vulnerable Road User Awareness Messages [6] (see Table 3).

The parameters values in the table may be derived from different sources such as 5GC Access and Mobility Management Function (AMF), 5G Operations, Administration and Maintenance (OAM), or the Application Server hosted by an Application Function (AF) [5]. Analytics filters may be used by the analytics consumer [5].

TTC calculation may be either performed in the reference (e.g. subject or target) UE or 5GC.

In C-ITS V2X messages (e.g. CAM), physical vehicle size is transmitted (length, width) which may be useful for a precise calculation of the distance between objects with conflicting trajectories (Figure 2). However, to make the TTC analytics generic for different verticals with different physical object sizes (e.g. vehicle vs robot) and for the implementation simplicity in 5GS, we propose to use a new generic parameter called 'Collision risk distance' which may be derived from the typical object size and could be provided by the Application Function.

**[Table 1]**

| **Parameter** | **Type** (Input / Out put / Filter) | **Description** | **Source** |
|---|---|---|---|
| **UE identifier** | Input | Unique identifier in the system | 5GC AMF |
| **UE location** | Input | Absolute geographic UE location | 5GC AMF |
| **Collision risk distance** | Input | Derived from the UE connected physical object dimensions e.g. length, width, height | Application Server/AF (e.g. V2X AS, value derived from V2X CAM messages defined in ETSI EN 302 637-2) |
| **UE speed** | Input | Absolute UE velocity | 5G OAM |
| **UE heading (absolute or relative)** | Input | UE moving direction. Absolute:heading of the UE movement with regards to the true north. Relative: heading of the UE movement with regards to the target UE heading | Application Server/AF (e.g. V2X AS, value derived from V2X CAM messages defined in ETSI EN 302 637-2) |
| **UE trajectory** | Input | Timestamped UE locations | Application Server/AF (e.g. V2X AS, value derived from V2X CAM messages defined in ETSI EN 302 637-2) |
| **Time To Collision** | Out put | Calculated by tracking a road user/object position, speed, acceleration and heading. Could be used as a likelihood of collision estimate | |
| **Time To Collision accurac y** | Out put | Derived from UEs positions accuracy with a collision risk | |
| **Time To Collision confidence** | Out put | Describes TTC prediction confidence level | |
| **Predefined geographical area** | Filter | Restricts the scope of the TTC analytics to the provided area (e.g. specific location or road network section - see section 6.1.3 in [9] for details) | Analytics consumer |
| **Time slot start** | Filter | Time slot start within the TTC analytics target period | Analytics consumer |
| **Time slot duration** | Filter | Duration of the TTC analytics time slot | Analytics consumer |

Table 1 shows Time To Collision analytics input, output and filter parameters.

**[Table 2]**

| **Data** Elements | **Type** | **Typical Size (Bytes)** | **Description** |
|---|---|---|---|
| **Header** | Mandatory | 8 | Protocol version, message type, sender address, and time stamp |
| ***Basic Container*** | *Mandatory* | *18* | Station type (e.g., lightTruck, cyclist, pedestrians, etc.) *and position* |
| ***High-Frequency (HF) Container*** | *Mandatory* | 23 | *All fast-changing status information of the vehicle, i.e., heading, speed, acceleration, vehicle length and width etc.* |
| **Low-Frequency (LF) Container** | Mandatory (every 500 ms) | 60 (7 *path history points)* | *Static or slow-changing vehicle data mainly path history. The path history is made up of a number of path history points. Typically, 7 path history points are sufficient to cover over 90% cases based on extensive testing whereas up to 23 path history points can be contained.* Each point is approximately 8 bytes [1]. |
| **Special Vehicle Container** | Optional | 2~11 | Specific vehicle's role in road traffic (e.g. public transport, vehicles realizing a rescuing operation, etc.). |

Table 2 shows Cooperative Awareness Message format (adopted from [8]). Parameters in *italics* are relevant to an example TTC calculation

**[Table 3]**

| **Parameter** | | **Comments** |
|---|---|---|
| VAM header including VRU identifier | M | |
| *VRU position* | *M* | |
| Generation time | M | |
| VRU profile | M | |
| VRU type | M | e.g. VRU profile is pedestrian, VRU type is infant, animal, adult, child, etc. |
| VRU cluster identifier | C | |
| VRU cluster position | C | |
| VRU cluster dimension | C | geographical size |
| VRU cluster size | C | number of members in the cluster |
| *VRU size class* | *C* | *mandatory if outside a VRU cluster, optional if inside a VRU cluster* |
| VRU weight class | C | mandatory if outside a VRU cluster, optional if inside a VRU cluster |
| *VR U speed* | *M* | |
| *VRU direction* | *M* | |
| VRU orientation | M | |
| Predicted trajectory | O | succession of way points |
| Predicted velocity | | including 3D heading and average speed |
| Heading changeindicators | O | turning left or turning right indicators |
| Hard braking indicator | O | |
| NOTE: "M" stands for "mandatory" which means that the data element shall be always included in the VAM message. "O" stands for "optional" which means that the data element can be included in the VAM message. "C" stands for "conditional" which means that the data element shall be included in the VAM message under certain conditions. | | |

Table 3 shows VRU Awareness Message format (adopted from [6]). Parameters in italics are relevant to an example TTC calculation.

### 2. Architectural enhancements of the 5G System reference model

In terms of architectural enhancements, the main procedural framework to request and deliver NWDAF analytics can be used in this case, as described in TS 23.288 [3]. The analytics consumer could be an AF or a 5GC NF using the analytics request/subscribe services in clause 7 of TS 23.288 [3] with an analytics ID (e.g. 'relative proximity') as input whose analytics output contains time to collision information. Different analytics filters can be used by the consumer, including those specified as 'Filter' in Table 1. NWDAF collects input data from the sources specified in Table 1 (e.g. AMF, AF, OAM) by using the services available in the 5GS for data collection (e.g. event exposure framework). NWDAF then derives the analytics and provides them to the consumer via the services specified in clause 7 of 23.288 [3].

Figure 4 schematically depicts an exemplary flow chart related to a method for managing proximity information between UEs. The method described in Figure 4 may be performed by a network entity. The network entity may be the NWDAF.

At step 410, the network entity may obtain information related to each of the UEs. The information related to each of the UEs includes at least one of a location, a speed and a heading of each of the UE.

The information related to each of the UEs may further include information indicating a trajectory of each of the UEs.

The information related to each of the UEs may be obtained from an operation, administration and maintenance (OAM).

At step 420, the network entity may obtain TTC information related to the UEs based on the obtained information related to each of the UEs.

The TTC information related to the UEs may include information indicating a TTC of the UEs.

The TTC information related to the UEs may further include information indicating a confidence level of prediction of the TTC of the UEs and information indicating accuracy of the TTC.

At step 430, the network entity may provide the obtained TTC information related to the UEs to another network entity.

Figure 5 schematically depicts an exemplary block diagram of an apparatus for a network entity.

The network entity may be implemented by the apparatus 500 or in the apparatus. The network entity may be any one of a plurality of network entities described in the present disclosure. The network entity may be the NWDAF.

The apparatus 500 may comprise a controller 510, a transceiver 520, and a memory 530.

The controller 510 may be implemented using at least one processor. The controller 510 may control operations of other elements of the apparatus 500. The controller 510 may control operations of the apparatus 500. The operations of the apparatus 500 for the network entity may be understood as being performed substantially by the controller 510. The controller 510 may perform operations of the network entity described in the present disclosure by executing instructions stored in a storage medium.

The transceiver 520 may be used for communications of the apparatus 500. The apparatus 500 may transmit and/or receive information through the transceiver 520. The transceiver 520 may comprise at least one receiver and at least one transmitter. The transceiver 520 may support communications based on any known radio access technologies (RATs).

The memory 530 may store temporary information and/or permanent information for operations of the apparatus 500 and/or the controller 510. The memory 530 may comprise a non-transitory computer-readable storage medium storing instructions. When the instructions are executed by the controller 510, the instructions may cause the controller 510 or the apparatus 500 to executed operations of the network entity described in the present disclosure.

Although a preferred embodiment has been shown and described, it will be appreciated by those skilled in the art that various changes and modifications might be made without departing from the scope of the invention, as defined in the appended claims and as described above.

In the proposed invention, it is assumed that TTC is calculated between two moving UEs connected to the 5G network. However, the TTC concept could be extended to the scenario with only one connected UE and other non-connected object such as road side infrastructure, building, wall, parked vehicle or a legacy vehicle without V2X transmission and reception capability which presence also creates a risk of a collision with a UE connected object. In such case, 5G network could be able to calculate the TTC value based on precise localization information of such object and its physical shape which may be available from an external source such as High Definition map, Local Dynamic Map [10]. Localisation data in these sources could be received from a range of different sources such as vehicles, infrastructure units, traffic centres, on-board sensors and applications.

Furthermore, in TTC calculation currently used in C-ITS applications, it is assumed that the UE speed is constant, however for more precise TTC calculation UE acceleration/deceleration may need to be also taken into account (as a new parameter e.g. which is already shared in V2X CAM messages) in the proposed analytics scheme.

At least some of the example embodiments described herein may be constructed, partially or wholly, using dedicated special-purpose hardware. Terms such as 'component', 'module' or 'unit' used herein may include, but are not limited to, a hardware device, such as circuitry in the form of discrete or integrated components, a Field Programmable Gate Array (FPGA) or Application Specific Integrated Circuit (ASIC), which performs certain tasks or provides the associated functionality. In some embodiments, the described elements may be configured to reside on a tangible, persistent, addressable storage medium and may be configured to execute on one or more processors. These functional elements may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Although the example embodiments have been described with reference to the components, modules and units discussed herein, such functional elements may be combined into fewer elements or separated into additional elements. Various combinations of optional features have been described herein, and it will be appreciated that described features may be combined in any suitable combination. In particular, the features of any one example embodiment may be combined with features of any other embodiment, as appropriate, except where such combinations are mutually exclusive. Throughout this specification, the term "comprising" or "comprises" means including the component(s) specified but not to the exclusion of the presence of others.

Throughout this specification, the term "comprising" or "comprises" means including the component(s) specified but not to the exclusion of the presence of other components. The term "consisting essentially of" or "consists essentially of" means including the components specified but excluding other components except for materials present as impurities, unavoidable materials present as a result of processes used to provide the components, and components added for a purpose other than achieving the technical effect of the invention, such as colourants, and the like.

The term "consisting of" or "consists of" means including the components specified but excluding other components.

Whenever appropriate, depending upon the context, the use of the term "comprises" or "comprising" may also be taken to include the meaning "consists essentially of" or "consisting essentially of", and also may also be taken to include the meaning "consists of" or "consisting of".

The optional features set out herein may be used either individually or in combination with each other where appropriate and particularly in the combinations as set out in the accompanying claims. The optional features for each aspect or exemplary embodiment of the invention, as set out herein are also applicable to all other aspects or exemplary embodiments of the invention, where appropriate. In other words, the skilled person reading this specification should consider the optional features for each aspect or exemplary embodiment of the invention as interchangeable and combinable between different aspects and exemplary embodiments.

### [EMPTY]

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

### References

[1] 3GPP TSG SA Tdoc SP-220678 'Study on Enablers for Network Automation for 5G - phase 3'
[2] 3GPP TSG SA TR 23.700-81 V0.3.0 'Study on Enablers for Network Automation for 5G - phase 3 (Release 18)'
[3] 3GPP TSG SA TS 23.288 V17.5.0 'Architecture enhancements for 5G System (5GS) to support network data analytics services (Release 17)'
[4] 3GPP TS 23.501 '5G; System Architecture for the 5G System'
[5] ETSI TS 101 539-3 'Intelligent Transport Systems (ITS); V2X Applications; Part 3: Longitudinal Collision Risk Warning (LCRW) application requirements specification'
[6] ETSI TS 103 300-2 'Intelligent Transport System (ITS); Vulnerable Road Users (VRU) awareness; Part 2: Functional Architecture and Requirements definition; Release 2'
[7] United Nations Regulation No. 152, Addendum 151 (E/ECE/TRANS/505/Rev.3/Add.151) 'Uniform provisions concerning the approval of motor vehicles with regard to the Advanced Emergency Braking System (AEBS) for M1 and N1 vehicles' (https://www.marklines.com/statics/unece/pdf_202006/R152e.pdf)
[8] ETSI EN 302 637-2 'Intelligent Transport Systems (ITS); Vehicular Communications; Basic Set of Applications; Part 2: Specification of Cooperative Awareness Basic Service'
[9] ETSI EN 302 637-3 'Intelligent Transport Systems (ITS); Vehicular Communications; Basic Set of Applications; Part 3: Specifications of Decentralized Environmental Notification Basic Service'
[10] ETSI EN 302 895 'Intelligent Transport Systems (ITS); Vehicular Communications; Basic Set of Applications; Local Dynamic Map (LDM)'

## Claims

1. A method for managing proximity information between user equipments, UEs, by a network entity (500), the method comprising:
obtaining (410) information related to each of the UEs, wherein the information related to each of the UEs includes at least one of a location, a speed and a heading of each of the UEs;
obtaining (420) time to collision, TTC, information related to the UEs based on the obtained information related to each of the UEs, wherein the TTC information related to the UEs includes information indicating a TTC of the UEs, information indicating a confidence level of prediction of the TTC of the UEs and information indicating accuracy of the TTC; and
providing (430) the obtained TTC information related to the UEs to another network entity.

2. The method of claim 1, wherein the information related to each of the UEs further includes information indicating a trajectory of each of the UEs.

3. The method of claim 1, wherein the network entity is a network data analytics function, NWDAF.

4. The method of claim 1, wherein the information related to each of the UEs is obtained from an operation, administration and maintenance, OAM.

5. An apparatus for a network entity (500) for managing proximity information between user equipments, UEs, the apparatus comprising:
a transceiver (520); and
a controller (510) coupled to the transceiver (520), wherein the controller (510) is configured to:
obtain information related to each of the UEs, wherein the information related to each of the UEs includes at least one of a location, a speed and a heading of each of the UEs;
obtain time to collision (TTC) information related to the UEs based on the obtained information related to each of the UEs, wherein the TTC information related to the UEs includes information indicating a TTC of the UEs, information indicating a confidence level of prediction of the TTC of the UEs and information indicating accuracy of the TTC; and
provide the obtained TTC information related to the UEs to another network entity.

6. The apparatus of claim 5, wherein the information related to each of the UEs further includes information indicating a trajectory of each of the UEs.

7. The apparatus of claim 5, wherein the network entity is a network data analytics function, NWDAF.

8. The apparatus of claim 5, wherein the information related to each of the UEs is obtained from an operation, administration and maintenance, OAM.

9. A non-transitory computer-readable storage medium storing instructions which, when executed by a controller (510) of an apparatus for a network entity (500) for managing proximity information between user equipments, UEs, causes the apparatus to perform operations, the operations comprising:
obtaining information related to each of the UEs, wherein the information related to each of the UEs includes at least one of a location, a speed and a heading of each of the UEs;
obtaining time to collision, TTC, information related to the UEs based on the obtained information related to each of the UEs, wherein the TTC information related to the UEs includes information indicating a TTC of the UEs, information indicating a confidence level of prediction of the TTC of the UEs and information indicating accuracy of the TTC; and
providing the obtained TTC information related to the UEs to another network entity.

10. The non-transitory computer-readable storage medium of claim 9, wherein the operations further comprise at least one operation according to a method in one of claims 2 to 4.

## Patentansprüche

1. Verfahren zum Verwalten von Proximitätsinformationen zwischen Benutzereinrichtungen, UEs, durch eine Netzentität (500), wobei das Verfahren Folgendes umfasst:
Erhalten (410) von Informationen bezüglich jeder der UEs, wobei die Informationen bezüglich jeder der UEs mindestens eines von einem Standort, einer Geschwindigkeit und einem Kurs jeder der UEs beinhalten;
Erhalten (420) von Informationen zu einer Zeit bis zur Kollision, TTC, bezüglich der UEs auf Grundlage der erhaltenen Informationen bezüglich jeder der UEs, wobei die TTC-Informationen bezüglich der UEs Informationen, die eine TTC der UEs angeben, Informationen, die ein Konfidenzniveau einer Vorhersage der TTC für die UEs angeben, und Informationen, die eine Genauigkeit der TTC angeben, beinhalten; und
Bereitstellen (430) der erhaltenen TTC-Informationen bezüglich der UEs an eine andere Netzentität.

2. Verfahren nach Anspruch 1, wobei die Informationen bezüglich jeder der UEs ferner Informationen beinhalten, die eine Bewegungsbahn jeder der UEs angeben.

3. Verfahren nach Anspruch 1, wobei die Netzentität eine Netzdatenanalysefunktion, NWDAF, ist.

4. Verfahren nach Anspruch 1, wobei die Informationen bezüglich jeder der UEs von einer Betriebs-, Verwaltungs- und Wartungsfunktion, OAM, erhalten werden.

5. Vorrichtung für eine Netzentität (500) zum Verwalten von Proximitätsinformationen zwischen Benutzereinrichtungen, UEs, wobei die Vorrichtung Folgendes umfasst:
einen Sendeempfänger (520); und
eine Steuerung (510), die an den Sendeempfänger (520) gekoppelt ist, wobei die Steuerung (510) zu Folgendem konfiguriert ist:
Erhalten von Informationen bezüglich jeder der UEs, wobei die Informationen bezüglich jeder der UEs mindestens eines von einem Standort, einer Geschwindigkeit und einem Kurs jeder der UEs beinhalten;
Erhalten von Informationen zu einer Zeit bis zur Kollision, TTC, bezüglich der UEs auf Grundlage der erhaltenen Informationen bezüglich jeder der UEs, wobei die TTC-Informationen bezüglich der UEs Informationen, die eine TTC der UEs angeben, Informationen, die ein Konfidenzniveau einer Vorhersage der TTC für die UEs angeben, und Informationen, die eine Genauigkeit der TTC angeben, beinhalten; und
Bereitstellen der erhaltenen TTC-Informationen bezüglich der UEs an eine andere Netzentität.

6. Vorrichtung nach Anspruch 5, wobei die Informationen bezüglich jeder der UEs ferner Informationen beinhalten, die eine Bewegungsbahn jeder der UEs angeben.

7. Vorrichtung nach Anspruch 5, wobei die Netzentität eine Netzdatenanalysefunktion, NWDAF, ist.

8. Vorrichtung nach Anspruch 5, wobei die Informationen bezüglich jeder der UEs von einer Betriebs-, Verwaltungs- und Wartungsfunktion, OAM, erhalten werden.

9. Dauerhaftes computerlesbares Speichermedium, auf dem Anweisungen gespeichert sind, die bei Ausführung durch eine Steuerung (510) einer Vorrichtung für eine Netzentität (500) zum Verwalten von Proximitätsinformationen zwischen Benutzereinrichtungen, UEs, die Vorrichtung dazu veranlassen, Vorgänge auszuführen, wobei die Vorgänge Folgendes umfassen:
Erhalten von Informationen bezüglich jeder der UEs, wobei die Informationen bezüglich jeder der UEs mindestens eines von einem Standort, einer Geschwindigkeit und einem Kurs jeder der UEs beinhalten;
Erhalten von Informationen zu einer Zeit bis zur Kollision, TTC, bezüglich der UEs auf Grundlage der erhaltenen Informationen bezüglich jeder der UEs, wobei die TTC-Informationen bezüglich der UEs Informationen, die eine TTC der UEs angeben, Informationen, die ein Konfidenzniveau einer Vorhersage der TTC für die UEs angeben, und Informationen, die eine Genauigkeit der TTC angeben, beinhalten; und
Bereitstellen der erhaltenen TTC-Informationen bezüglich der UEs an eine andere Netzentität.

10. Dauerhaftes computerlesbares Speichermedium nach Anspruch 9, wobei die Vorgänge ferner mindestens einen Vorgang gemäß einem Verfahren in einem der Ansprüche 2 bis 4 umfassen.

## Revendications

1. Procédé, permettant de gérer des informations de proximité entre des équipements utilisateur, UE, par une entité de réseau (500), le procédé comprenant :
l'obtention (410) des informations relatives à chacun des UE, les informations relatives à chacun des UE comportant au moins l'un parmi un emplacement, une vitesse et une direction de chacun des UE ;
l'obtention (420) des informations sur le temps avant collision, TTC, relatives aux UE à partir des informations obtenues relatives à chacun des UE, les informations TTC relatives aux UE comportant des informations indiquant un TTC des UE, des informations indiquant un niveau de confiance de la prédiction du TTC des UE et des informations indiquant la précision du TTC ; et
la fourniture (430) des informations TTC obtenues relatives aux UE à une autre entité de réseau.

2. Procédé selon la revendication 1, dans lequel les informations relatives à chacun des UE comportent en outre des informations indiquant une trajectoire de chacun des UE.

3. Procédé selon la revendication 1, dans lequel l'entité de réseau est une fonction d'analyse de données réseau, NWDAF.

4. Procédé selon la revendication 1, dans lequel les informations relatives à chacun des UE sont obtenues de la part d'une opération, administration et maintenance, OAM.

5. Appareil pour une entité de réseau (500) permettant de gérer des informations de proximité entre des équipements utilisateur, UE, l'appareil comprenant :
un émetteur-récepteur (520) ; et
un dispositif de commande (510) couplé à l'émetteur-récepteur (520), dans lequel le dispositif de commande (510) est configuré de manière à :
obtenir des informations relatives à chacun des UE, les informations relatives à chacun des UE comportant au moins l'un parmi un emplacement, une vitesse et une direction de chacun des UE ;
obtenir des informations sur le temps avant collision (TTC) relatives aux UE à partir des informations obtenues relatives à chacun des UE, les informations TTC relatives aux UE comportant des informations indiquant un TTC des UE, des informations indiquant un niveau de confiance de la prédiction du TTC des UE et des informations indiquant la précision du TTC ; et
fournir les informations TTC obtenues relatives aux UE à une autre entité de réseau.

6. Appareil selon la revendication 5, dans lequel les informations relatives à chacun des UE comportent en outre des informations indiquant une trajectoire de chacun des UE.

7. Appareil selon la revendication 5, dans lequel l'entité de réseau est une fonction d'analyse de données réseau, NWDAF.

8. Appareil selon la revendication 5, dans lequel les informations relatives à chacun des UE sont obtenues de la part d'une opération, administration et maintenance, OAM.

9. Support de stockage non transitoire lisible par ordinateur stockant des instructions qui, lorsqu'elles sont exécutées par un dispositif de commande (510) d'un appareil pour une entité de réseau (500) permettant de gérer des informations de proximité entre des équipements utilisateur, UE, amènent l'appareil à mettre en œuvre des opérations, les opérations comprenant :
l'obtention des informations relatives à chacun des UE, les informations relatives à chacun des UE comportant au moins l'un parmi un emplacement, une vitesse et une direction de chacun des UE ;
l'obtention des informations sur le temps avant collision, TTC, relatives aux UE à partir des informations obtenues relatives à chacun des UE, les informations TTC relatives aux UE comportant des informations indiquant un TTC des UE, des informations indiquant un niveau de confiance de la prédiction du TTC des UE et des informations indiquant la précision du TTC ; et
la fourniture des informations TTC obtenues relatives aux UE à une autre entité de réseau.

10. Support de stockage non transitoire lisible par ordinateur selon la revendication 9, dans lequel les opérations comprennent en outre au moins une opération conformément à un procédé selon l'une des revendications 2 à 4.
